# EUROPEAN PATENT APPLICATION

(11) **EP 3 483 499 A1**
(43) Date of publication of application: **15.05.2019**
(21) Application number: 18200727.8
(22) Date of filing: 16.10.2018
(51) Int. Cl.: F21S 43/20

(54) **OUTSIDE ILLUMINATION DEVICE FOR A VEHICLE, AND METHOD OF MANUFACTURING**

(30) Priority: 17.10.2017 ES 201731225
(71) Applicant: Seat, S.A., 08760 Martorell (ES)
(72) Inventor: CORULL MASSANA, Ernest, 08760 Martorell (ES); RAMIREZ MESA, Liliana, 08760 Martorell (ES); GALLARDO RUIZ, Tony, 08760 Martorell (ES); CASTELLS CELA, Jordi, 08760 Martorell (ES)
(74) Representative: Elzaburu S.L.P.

(57) **Abstract**

Outside illumination device for a vehicle (1), with a light emitter (21), an outside cover (41), partially transparent, so that it allows the transmission of a light generated by the at least one light emitter (21) towards the outside of the vehicle (1), a light diffuser (42), that homogenizes the light emitted by the at least one light emitter (21), wherein the light diffuser (42) is arranged contiguous with at least one portion of an inside surface of the outside cover (41). The outside cover (41) and the diffuser (42) are overinjected by means of a multiple injection process, first injecting the outside cover (41), and then the diffuser (42) in a portion of the inside surface of the outside cover (41). Thus a clear three-dimensional signature effect is created, eliminating optical noise as a result of the superimposition of the various components.

## Description

### OBJECT OF THE INVENTION

The object of the present patent application is an outside illumination device for a vehicle according to Claim 1, which incorporates notable innovations and advantages, together with a method of manufacturing an illumination device, according to Claim 13.

### BACKGROUND OF THE INVENTION

The illumination devices of current vehicles, specifically signalling lamps or devices arranged at the rear of the vehicle, have a protective component or outside cover, in order to protect the internal components, such as an illumination source. Said cover has to have some provisions for light transmission towards the outside, so that the light emitted towards the outside is maximized, while various shapes or geometries are offered with the aim of achieving a more elegant design of the outside of the vehicle.

In this regard, a headlamp cover is known from the prior art, as disclosed in document US20050003159, that includes a resin layer of a first colour. This layer is laminated and moulded over a resin layer of a second clear colour. The second layer protrudes beyond the first layer. The first layer comes into contact with the second layer of molten resin. The first resin layer does not mix with the second layer.

Said document thus describes a generic process for overinjecting a first resin on a second resin in order that it does not mix with or displace the first resin given the fact that the second resin comes in contact with said first resin in a molten state. The inside layer does not protrude from the headlamp cavity. It is observed, in contrast to the present invention, that the inside layer does not perform any light treatment function, but only involves an opaque element that prevents the passage of light.

A headlamp is also known from the prior art, according to document US20080180970, with a housing and an illumination unit. The illumination unit is divided into at least two separate windows, with an area that does not allow the transmission of light. The aim of the present invention is to obtain an area of continuous illumination being perceived between two separate areas of light transmission. Thus, in spite of the divided light window, continuous light transmission is perceptible to the observer, when both light windows fulfil the same illumination function. In said document a lens, or outside cover, is also installed, formed of two layers formed through a multi-injection process.

Also known to the prior art, according to document US20080088926, is a moulding process for manufacturing a moulded piece having multiple individual optical elements with the same or different dimensions. This is accomplished through the use of a multiple injection process. In the first step, the optical elements are moulded without any junction between them. In the second step, a layer of plastic is moulded in order to join together all the optical elements to create a single piece. The moulded piece thus consists of two plastic injections with optical elements which is more easily adaptable to a variety of different designs for lights having two or more colours. It is noted that the inclusion of optical elements in the outside cover causes inhomogeneous discontinuities in the illuminated areas.

Accordingly, and in view of all the foregoing, it is seen that there is still a need for having an outside illumination device for a vehicle that makes it possible to reduce the number of components and decrease the volume of critical areas, in order to create a clear signature effect in three dimensions, and to eliminate optical noise as a result of the superimposition of different illumination components.

### DESCRIPTION OF THE INVENTION

The present invention consists of an outside illumination device for a vehicle, and an associated method of manufacturing, specifically an outside cover or lens for the headlamp.

Lens or outside cover is understood to mean the outside part of the lamp, fulfilling a function of enclosing it and protecting it from external impacts and agents. It is generally a transparent, non-diffuser element. Lenses, or outside covers, may have optical structures for improving visibility, the field of illumination covered, or also due to design requirements. The present invention provides the inventive concept of having a lens that incorporates a diffuser material, by injecting the diffuser material directly into the lens.

As a solution known to date, and with the object of obtaining a signature effect or an outline illuminated with a homogeneous diffused light, the inside of the lamp comprised a diffuser element arranged at a certain distance from the light emitters. Said distance is required in order to achieve a homogeneity in the light emitted by the lamp. Additionally, the diffuser element was arranged at a certain distance from the lens, in order to facilitate the process of assembling the lens with the housing, normally by a vibration welding process.

The designs sought previously consisted of illuminated outlines or serigraphs, said serigraphs being on a normally flat surface. Normally this is a surface substantially perpendicular to the direction of driving. Current and future designs seek to create surfaces illuminated in three dimensions, creating illuminated volumes that stand out in the direction of driving. However, by combining illumination technology with a diffuser element as previously explained with the three-dimensional serigraphs, noise and distortions are created in the luminosity lines, while the volume occupied by the elements of the illumination device is greater. This noise is due to the diffuser element being substantially flat and the distance to the lens or outside cover is variable, depending on its design. Thus, the edges of the outside cover will generate black lines on the diffuser element to the outside observer, thus creating reflections and diffractions and in turn, a non-homogeneous illumination.

The present invention aims at combining design and technology within the context of complying with the existing legislation relating to the angles of visibility of the signalling functions such as position and intermittency. It is also aimed at improving continuity in the illumination of signalling functions in vehicles that require divided lamps, minimizing the non-illuminated areas between a fixed lamp and a movable lamp, and avoiding the appearance of seams, noise and distortions that arise when the diffuser is separate from the outside housing or lens.

Moreover, it is noted that the current process of assembling a vehicle headlamp, includes a step in which the lens is joined to the housing by vibration. In this process the welding takes place between both components causing them both to be joined and sealed. It is therefore necessary to resort to a minimum safety distance of at least 2 mm between components around the lens so that there is no interference or unwanted contacts.

In addition, other technical advantages of the present invention with respect to the concept of a lens or outside cover with a separate flat diffuser element, would be a reduction in the volume occupied by the elements, both in the X direction, i.e. in the direction of travel of the vehicle, and in the Z direction, i.e. in the vertical direction, while allowing a reduction in time and costs in the manufacturing process and in the use of additional parts and tools.

Specifically, the present invention relates to an outside illumination device for a vehicle, comprising at least one light emitter, an outside cover, in which the outside cover is partially transparent, so that the outside cover allows the transmission of a light generated by the at least one light emitter towards the outside of the vehicle, a light diffuser, in which the diffuser homogenizes the light emitted by the at least one light emitter, wherein the light diffuser is arranged contiguous with at least one portion of an inside surface of the outside cover.

Thus, the diffuser fulfils the function of generating a homogeneous light. An observer outside the vehicle will be able to view a constantly and homogeneously illuminated surface, with the same intensity of illumination.

It is specified that the feature that the diffuser is arranged contiguous with the outside cover means that it is in contact, i.e. that the diffuser is arranged adjacent to the outside cover, located overlappingly, without a space between the two components. In a preferred embodiment, the whole of the diffuser is in contact with the inside surface of the outside cover. Thus, the outside cover may be larger than the diffuser. However, the diffuser is in contact with the portion of outside cover which is in front. As mentioned, outside cover is understood to mean a part that fulfils a function of protecting the internal components of the vehicle headlamp.

The advantages of the present invention lie in being able to obtain novel designs for vehicle headlamps, especially in combination with outside covers or lenses with three-dimensional shapes. Thus a serigraph or illuminated outline effect is achieved, with much more impact, maintaining homogeneity in the light generated, and reducing the space or volume occupied by the component elements. Thus, the unwanted effect of optical "noise" and light interference is minimized, in the signature, or illuminated shape. It is also made possible to reduce the non-illuminated clearance, or existing space between the various headlamps comprising the whole lighting device on each side of the vehicle.

It should be pointed out that having the diffuser contiguous with the lens or outside cover brings a great improvement in terms of visibility. Currently photometry tests have to be passed, specifically for angles at which a determined light is visible. The fact that the lens or outside cover is integrated with the diffuser, means that the outside glass itself is directly illuminated, thereby increasing the freedom of design and obtaining more enclosed, i.e. concave, designs with a greater angle of visibility from an observation point in the same plan section of the vehicle, and preferably from a side angle.

In addition, the present invention means that an outside illumination device may be obtained with an improved aesthetic effect, due to its own glass or outside cover being illuminated directly, resulting in a better visual effect. In addition, and thanks to the diffuser being arranged contiguous with the outside cover, the outside cover will be illuminated homogeneously. Current designs, which do not benefit from the present invention, are seen to have a substantially transparent outside cover and an inner back-lit surface separate from the outside cover.

According to another aspect of the invention, the outside cover is made of plastic and the light diffuser is made of plastic, in which the outside cover and the diffuser are produced by means of an overinjection process. Thus, the diffuser element is contiguous with the outside cover, as a result of the manufacturing process, additionally benefiting from a faster production process with less tooling costs.

In a preferred embodiment of the invention, the outside illumination device comprises a third element, in which the third element is substantially opaque so as to prevent the transmission of a light generated by the at least one light emitter towards the outside of the vehicle, in which the third element is arranged contiguous with at least one portion of the inside surface of the outside cover. Thus, the third element, preferably composed of plastic, fulfils a function of shielding the light emitted by the at least one light emitter, so that, according to a preferred embodiment, in which there is a diffuser, there is no third element and vice versa. Thus, the areas of light transmission towards the outside are delimited by means of the third element, helping to create the serigraph or desired illuminated outline.

More particularly, the outside cover is made of plastic and the third element is made of plastic, in which the outside cover and the third element are produced by means of an overinjection process. Thus, both components are contiguous and rigidly connected, improving their performance in sealing and opacity to light transmission via an unwanted path.

Moreover, the diffuser is arranged contiguous with a first portion of the inside surface of the outside cover and the third element is arranged contiguous with a second portion of the inside surface of the outside cover. Thus, there is a distribution of the areas of the outside cover, in some there being a path for light transmission, according to some determined properties, and in others there being an opacity, for the non-transmission of light via unwanted areas according to design.

According to a particular embodiment of the invention, the third element is arranged contiguous with a portion of the inside surface of the outside cover and with a portion of the inside surface of the diffuser. Thus, in order to optimize the overlap between the diffuser and the third element, an arrangement is created in which the diffuser lies between the third element and the outside cover, there always being at least one material contiguous with the outside cover. Thus, there is a perfect fit between the three components, optimizing the sealing performance, as well as that of light transmission, in the desired directions and areas according to design.

According to another particular embodiment of the invention, the light diffuser is arranged contiguous with a portion of the inside surface of the outside cover and with a portion of the inside surface of the third element. Thus, in order to optimize the overlap between the diffuser and the third element, an arrangement is created in which the third element lies between the diffuser and the outside cover, there always being at least one material contiguous with the outside cover. Thus, there is a perfect fit between the three components, optimizing the sealing performance, as well as that of light transmission, in the desired directions and areas according to design.

According to another preferred embodiment of the invention, the outside cover is of a substantially transparent red colour. Thus the vehicle headlamp has a uniform surface, preferably of said red colour, so that it matches the type of light signal necessary both for a rear brake light, and a rear tail light.

More specifically, the third element is of an opaque black colour, so that it has a good performance in opacity, or for obstructing the passage of light towards the outside of the illumination device.

Advantageously, the outside cover is made of PMMA (methacrylate or polymethyl methacrylate) so that it benefits from the performance of said material in terms of strength and good weldability with the housing material, which is preferably ABS (acrylonitrile butadiene styrene), a shock- and impact-resistant plastic, or PC (polycarbonate), a plastic that is easy to work, mould and thermoform.

It should be pointed out that the outside cover, preferably made of PMMA, is not necessarily transparent in all its areas, but it is in the light outputs of the vehicle's headlamp functions.

In addition, the diffuser is made of PMMA, also benefiting from the performance of said plastic. Diffuser is understood to mean a light transmitting element, in accordance with some determined intensity and direction properties. The greater the diffusion is, the less the transmission of light and vice versa. Also the greater the homogeneity is, the less the efficiency (light emitted) and vice versa. The thickness of the filter, or diffuser element, also influences the degree of diffusion.

It should be mentioned that the PMMA diffuser material is, preferably, any of those in the group of DF21, DF22, DF23 or Evonik's 0V200, treated with particles inside that reflect the light in all directions, achieving a uniformly illuminated surface.

In addition, it should also be mentioned that the light source, preferably an LED diode, and alternatively a lamp or other illumination devices, lies behind the diffuser at a sufficient distance. In order to avoid the generation of bright spots and dark spots, the minimum distance between the light source and the diffuser is 30 mm, preferably keeping within a range of 20-40 mm.

According to another aspect of the invention, the outside cover comprises at least one edge, in which at least one edge is in the area of transmission of the light generated by the at least one light emitter towards the outside of the vehicle. Thus, the outside cover is a non-planar outside cover, having surfaces in different planes. Preferably, the outside cover extends in the direction of travel of the vehicle. It is noted that the aim is to illuminate said volume or three-dimensional outside cover. It should be pointed out that the diffuser copies or reproduces said three-dimensional volume, so that it also copies said edge, the diffuser being contiguous with the outside cover, as already mentioned. Thus, as previously mentioned, with a conventional structure of the illumination device, the seams or edges of the outside lens or outside glass would cause the generation of black lines towards the inside of the lamp, i.e. light reflections and diffraction. The fact of producing a diffuser that directly copies the shape of the lens prevents said aesthetic problem, creating a homogeneously illuminated volume.

Another object of the present invention is a method of manufacturing an illumination device, wherein the outside cover and the diffuser are overinjected by means of a multiple injection process, comprising the steps of, first, injecting the outside cover, and second, injecting the diffuser in a portion of the inside surface of the outside cover. The contiguity of the diffuser with respect to the outside cover is thus achieved. Thus, and in order to obtain a vehicle headlamp with an illuminated signature directly integrated in the lens or outside cover, it is advantageous to inject the materials of both components by means of multiple injection.

In addition, the method of manufacturing comprises an additional step of injecting the substantially opaque third element over at least one portion of the inside surface of the outside cover. The contiguity of the substantially opaque third element with respect to the outside cover is thus achieved.

It follows from the foregoing that, in a preferred embodiment, the third element is arranged contiguous with a portion of the inside surface of the outside cover and with a portion of the inside surface of the diffuser. In another preferred embodiment, the light diffuser is arranged contiguous with a portion of the inside surface of the outside cover and with a portion of the inside surface of the third element.

The attached drawings depict, by way of a non-restrictive example, an outside illumination device for a vehicle, and an associated method of manufacturing, constituted in accordance with the invention. Other features and advantages of said outside illumination device for a vehicle, and associated method of manufacturing, the object of the present invention, will become clear from the description of a preferred, but not exclusive, embodiment that is illustrated by way of a non-restrictive example in the accompanying drawings, in which:

### BRIEF DESCRIPTION OF THE DRAWINGS

Figure 1.- Is a perspective view of an outside illumination device for a vehicle in accordance with the present invention.
Figure 2A.- Is an exploded perspective view of a first module of an outside illumination device for a vehicle, in accordance with the present invention.
Figure 2B.- Is an exploded perspective view of a second module of an outside illumination device for a vehicle, in accordance with the present invention.
Figure 3A.- Is a front view of the first and second modules of an outside illumination device for a vehicle, in accordance with the present invention.
Figure 3B.- Is a sectional view of a first module of an outside illumination device for a vehicle, in accordance with the present invention.

### DESCRIPTION OF A PREFERRED EMBODIMENT

In view of the aforementioned figures and in accordance with the adopted numbering, a preferred embodiment of the invention may be seen therein, comprising the parts and elements that are mentioned and described in detail below.

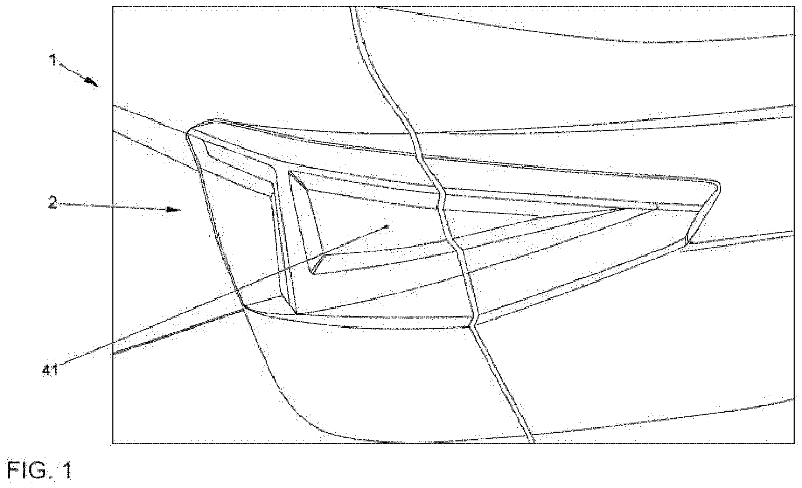

Figure 1 illustratively depicts an outside illumination device 2 for a vehicle 1 with an outside cover 41, with a particular design. The outside illumination device 2 is located on the rear left-hand part of a vehicle 1, wherein the outside illumination device 2 comprises a first module or half, located at the rear end of the vehicle 1, in which the first module is rigidly connected to the vehicle structure. Moreover, the outside illumination device 2 comprises a second module or half, located adjacent to the first module and rigidly connected to the tailgate of the vehicle 1. The present description non-restrictively refers to an illumination device composed of two modules, while the invention may be equally valid for a single module or for more than two modules.

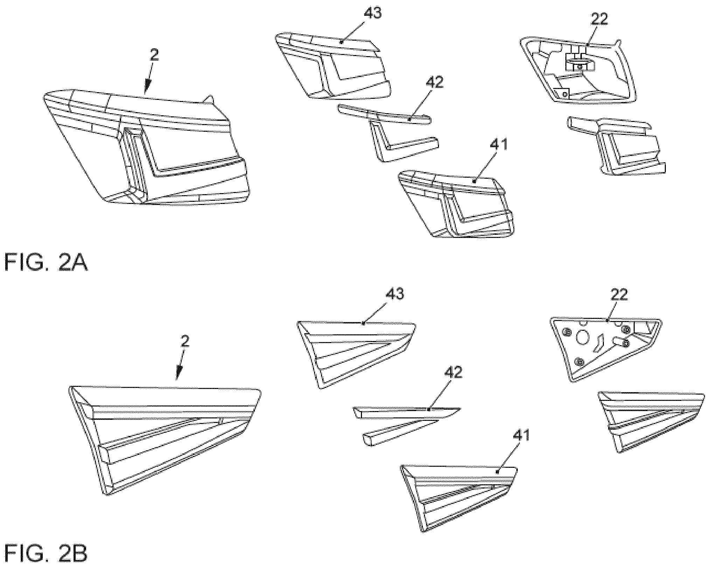

Said Figure 1 depicts an outside illumination device 2 with the special feature that the outside cover 41 comprises at least one edge, so that it has a three-dimensional or volume design towards the outside of the vehicle 1. Light transmission will also take place in the area where said edges exist, so that, in order for an outside observer to view a homogeneously illuminated three-dimensional surface, the optical structure used has to be modified. Three-dimensional outside cover 41 is understood to mean a cover consisting of a non-continuous surface, with different planes separated by edges. Thus, it is sought to create illuminated surfaces that protrude from the surface of the vehicle 1. Figure 2A illustratively depicts an exploded view of the first module of an outside illumination device 2 for a vehicle 1, wherein the sequence of the following parts are seen in their assembly arrangement: a housing 22, a third element 43, a diffuser 42 and an outside cover 41. Thus, the housing 22 and the outside cover 41 create an inside volume, which houses a set of optical elements that make it possible to create a light with determined properties. Thus, the inside volume houses a diffuser 42 and at least one light emitter 21, in addition to other possible components such as light splitters, optics, printed circuit boards, etc.

In order to create a serigraph or illuminated outline homogeneously, a light diffuser 42 is used, which is arranged between the at least one light emitter 21 and the outside cover 41. In addition, it may be noted that the shape of the third element 43 and of the diffuser 42 are complementary, so that the areas are precisely delimited that will allow the transmission of light towards the outside, through the diffuser 42, and the areas that will obstruct the transmission of light towards the outside, i.e. in the third element 43.

Figure 2B illustratively depicts an exploded view of a second module of an outside illumination device 2 for a vehicle 1 sharing the same structure and sequence as in the first module, with a serigraph or different illuminated outline. Thus, the sequence of the following parts is seen in their assembly arrangement: the housing 22, the third element 43, the diffuser 42 and the outside cover 41. Accordingly, the light will be transmitted through the outside cover 41 in different areas of the first module, also delimited by the third element 43.

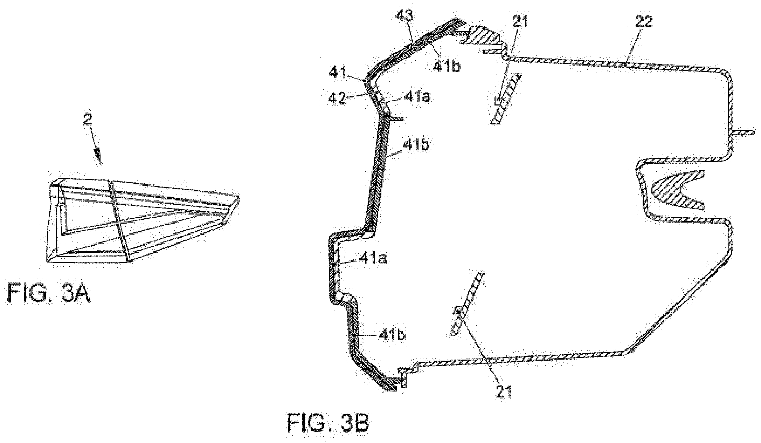

Figure 3A illustratively depicts a front view of the first and second modules of an outside illumination device 2 for a vehicle 1. One of the main advantages of the present invention is to achieve that illumination takes place in the outermost possible area. Thus, an outside observer will see an effect in which the outside cover 41 will be directly illuminated. Advantageously, the illumination occurring directly in the outermost element of the outside illumination device 2 and not in internal elements, the clearance or separating space between the first module and the second module of the outside illumination device 2 is minimal, thereby achieving a better finish and visual appearance.

Moreover, the fact of directly illuminating the outside cover 41 makes it possible to increase the angle or field in which the outside illumination device 2 will be seen from the outside. Greater freedom of design is thus achieved for meeting current regulations relating to this subject.

Figure 3B illustratively depicts a sectional view of the first module of an outside illumination device 2 for a vehicle 1. Said sectional view displays at least two light emitters 21, located inside the housing 22. In this case, the light emitters 21 create the same illumination function, alternatively being able to create different illumination functions. Moreover, each light emitter 21 illuminates a separate area. Preferably, a diffuser element 42 is located facing the light emitter 21 in order to homogenize the emitted light.

Moreover, the diffuser element 42 is located contiguously with the outside cover 41. The third element 43 is located attached to the diffuser element 42, also located contiguously with the outside cover 41.

Figure 3B also shows how the inside of the chamber delimited between the outside cover 41 and the inside cover or housing 22 is full of light, so that the light escapes through the areas of the diffuser 42. Alternatively there may also be some channels that lead the light directly from the light emitter 21 to the area of the diffuser 42, so that light losses are avoided. Said channels are preferably made of a material matt white in colour.

It should be mentioned that the outside cover 41, in a preferred embodiment, is of a substantially transparent red colour. The outside cover 41 may also be single-coloured (white or red), or two-coloured (red with white window), with a thin layer, either partially or totally, overmoulded ("skin-moulding") in both cases by overinjection. It should be pointed out that the outside cover 41 or lens may preferably be of a thickness of between 2 and 2.2 mm, and in the case of a thin overmoulded layer ("skin-moulding") the thickness may be between 4 and 5 mm.

More particularly, the third element 43 is of an opaque black colour, preferably made of PMMA, wherein the outside cover 41, the diffuser 42 and the third element 43 are each of a different colour from each other.

According to another aspect of the invention, the diffuser 42 is made of PMMA, treated with particles inside that reflect the light in all directions, thus obtaining a uniformly illuminated surface.

According to the described structure, the light emitted by the at least one light emitter 21 is emitted only in the areas where there is the diffuser 42, allowing the transmission of light towards the outside cover 41 and this, in turn, towards the outside of the vehicle 1. Said areas of illumination are delimited by the third element 43, which prevents the transmission of light towards the outside of the vehicle 1. Thus only an illumination of the outline or serigraph sought is achieved.

In more detail, the diffuser 42 is arranged partly contiguous with the inner surface of the outside cover 41. Moreover, the third element 43 is arranged partly contiguous with the inner surface of the outside cover 41. It may be said that the third element 43 and the diffuser 42 are alternately distributed over the whole inside surface of the outside cover 41, so that where there is diffuser 42 material, there is no third element 43, and vice versa.

The detail of a first portion of the inside surface 41a is similarly seen, which protrudes from the vehicle 1 with respect to a second portion of the inside surface 41b. Thus, the diffuser 42 is arranged contiguous with the first portion of the inside surface, creating an effect where the outermost area of the outside illumination device 2 of the vehicle 1 is illuminated. Moreover, the third element is arranged contiguous with the second portion of the inside surface 41b.

A preferred embodiment has been proposed where the diffuser 42 and the third element 43 are arranged contiguously and alternately on the inside surface of the outside cover 41. Alternatively, the third element 43 may be arranged contiguous with a portion of the inside surface of the outside cover 41 and superimposed on a portion of the inside surface of the diffuser 42, thus ensuring the overlap between both components and the creation of a more precise illuminated outline. There might be another alternative embodiment in which, at least partially, and in a specific area, the diffuser 42 may be arranged contiguous with a portion of the inside surface of the outside cover 41 and superimposed on a portion of the inside surface of the third element 43.

According to yet another aspect of the invention, the light emitter 21 is an LED, with a distance between the light emitter 21 and the diffuser 42 of at least 20 mm.

According to a preferred embodiment of the invention, the outside cover 41 comprises at least one edge, where the at least one edge is in the area of transmission of the light generated by the at least one light emitter 21 towards the outside of the vehicle 1. Said edge or seam in the lens or outside cover 41 may be an acute or obtuse angle. The function of said edges is that of creating volumes and geometries projecting from the vehicle 1.

According to an alternative embodiment of the invention, the light emitter 21 may be directed and emit light towards a receiving optical element, preferably elongated, either of the same diffuser 42, or of the same lens or outside cover 41, it not being essential that the diffuser 42 and outside cover 41 are superimposed over the whole inner surface of the outside cover.

Another object of the invention is a method of manufacturing an outside illumination device 2, wherein the outside cover 41 and the diffuser 42 are overinjected by means of a multiple injection process, comprising the steps of injecting the outside cover 41, and of injecting the diffuser 42 in a portion of the inside surface of the outside cover 41, so that the diffuser 42 is arranged contiguous with the outside cover 41.

It should be pointed out that the multiple injection process may also be bi-injection, and is based on injecting the diffuser filter 42 directly into the lens or outside housing 41.

According to an alternative embodiment of the invention, and having the inclusion of a third element 43, three materials are injected in three stages: diffuser 42, opaque black third element 43, and the lens or outside housing 41 as a transparent red layer on these two previous elements. As has been previously described, the third element 43 is arranged contiguous with the outside cover 41, delimiting the areas of the outside cover 41 that transmit light towards the outside of the vehicle 1.

The details, shapes, dimensions and other accessory elements, as well as the components employed in implementing the outside illumination device for a vehicle, and associated method of manufacturing, may be conveniently replaced by others that are technically equivalent, and do not depart from the essence of the invention or the scope defined by the claims that are included after the following list.

### List of numerical references:

- 1: vehicle
- 2: outside illumination device
- 21: light emitter
- 22: housing
- 41: outside cover
- 41a: first portion of the inside surface
- 41b: second portion of the inside surface
- 42: diffuser
- 43: third element

## Claims

1. Outside illumination device for a vehicle (1), comprising:
- at least one light emitter (21),
- an outside cover (41), in which the outside cover (41) is partially transparent, so that the outside cover (41) allows the transmission of a light generated by the at least one light emitter (21) towards the outside of the vehicle (1),
- a light diffuser (42), in which the diffuser (42) homogenizes the light emitted by the at least one light emitter (21),
**characterized in that** the light diffuser (42) is arranged contiguous with at least one portion of an inside surface of the outside cover (41).

2. Outside illumination device according to Claim 1, **characterized in that** the outside cover (41) is made of plastic and the light diffuser (42) is made of plastic, in which the outside cover (41) and the diffuser (42) are produced by means of an overinjection process.

3. Outside illumination device according to Claim 1, **characterized in that** it comprises a third element (43), in which the third element (43) is substantially opaque so as to prevent the transmission of a light generated by the at least one light emitter (21) towards the outside of the vehicle (1), in which the third element (43) is arranged contiguous with at least one portion of the inside surface of the outside cover (41).

4. Outside illumination device according to Claim 3, **characterized in that** the outside cover (41) is made of plastic and the third element (43) is made of plastic, in which the outside cover (41) and the third element (43) are produced by means of an overinjection process.

5. Outside illumination device according to either of Claims 3 or 4, **characterized in that** the diffuser (42) is arranged contiguous with a first portion of the inside surface (41a) of the outside cover (41) and the third element (43) is arranged contiguous with a second portion of the inside surface (41b) of the outside cover (41).

6. Outside illumination device according to either of Claims 3 or 4, **characterized in that** the third element (43) is arranged contiguous with a portion of the inside surface of the outside cover (41) and with a portion of the inside surface of the diffuser (42).

7. Outside illumination device according to either of Claims 3 or 4, **characterized in that** the light diffuser (42) is arranged contiguous with a portion of the inside surface of the outside cover (41) and with a portion of the inside surface of the third element (43).

8. Outside illumination device according to any of the preceding claims, **characterized in that** the outside cover (41) is of a substantially transparent red colour.

9. Outside illumination device according to any of Claims 3 to 7, **characterized in that** the third element (43) is of an opaque black colour.

10. Outside illumination device according to any of the preceding claims, **characterized in that** the outside cover (41) is made of PMMA.

11. Outside illumination device according to any of the preceding claims, **characterized in that** the diffuser (42) is made of PMMA.

12. Outside illumination device according to any of the preceding claims, **characterized in that** the outside cover (41) comprises at least one edge, where the at least one edge is in the area of transmission of the light generated by the at least one light emitter (21) towards the outside of the vehicle (1).

13. Method of manufacturing an illumination device according to any of the preceding claims, **characterized in that** the outside cover (41) and the diffuser (42) are overinjected by means of a multiple injection process, which comprises the steps of:
i) injecting the outside cover (41),
ii) injecting the diffuser (42) in a portion of the inside surface of the outside cover (41).

14. Method of manufacturing an illumination device according to Claim 13, **characterized in that** it comprises an additional step of injecting the substantially opaque third element (43) over at least one portion of the inside surface of the outside cover (41).
